# EUROPEAN PATENT APPLICATION

(11) **EP 3 772 020 A1**
(43) Date of publication of application: **03.02.2021**
(21) Application number: 20152735.5
(22) Date of filing: 20.01.2020
(51) Int. Cl.: G06K 15/10, H04N 1/60, H04N 1/407, B41J 2/21, B41J 19/14, H04N 1/54

(54) **SCANNING INKJET PRINTER**

(30) Priority: 01.08.2019 EP 19189673
(71) Applicant: Canon Production Printing Holding B.V., 5914 HH Venlo (NL)
(72) Inventor: PETERS, Dirk G., 5914 HH Venlo (NL); FRIJNTS, Tim, 5914 HH Venlo (NL)
(74) Representative: Canon Production Printing IP Department

(57) **Abstract**

Gloss banding when printing on a scanning inkjet printer is reduced by printing a predetermined pattern of selected image areas of an image during a first pass of the carriage over a print medium to print a first swath, such that consecutively printed image areas are spaced apart from one another in the scanning direction a spacing width of a low level deposition area. Additional image areas of the image are printed on the low level deposition areas during one or more passes of the carriage over the print medium following the first pass, after which the printed image areas together form a band of the image. The spacing between neighboring low level deposition areas varies irregularly across the band for different pairs of consecutively printed image areas. This irregular printing pattern redistributes the glossiness levels of different image areas irregularly over the image, such that macroscopically the gloss level appears substantially homogenous.

## Description

### FIELD OF THE INVENTION

The present invention generally pertains to a method for printing an image by means of a scanning inkjet printer comprising a print head carriage translatable in a scanning direction, to a scanning inkjet printer.

### BACKGROUND ART

A scanning inkjet printer comprises a reciprocally moveable print head carriage which moves in alternating passes over a medium support surface supporting a print medium. Such printers may be roll printers, wherein the print medium is moved over the medium support surface perpendicular to a scanning direction of the print head carriage or a flatbed printer wherein the print head carriage is translatable along a beam, which beam is moveable perpendicular to a longitudinal direction of the beam. An image is printed on the print medium in consecutive swaths which may be formed in one or more passes of the print head carriage over the medium support surface. The image is formed by jetting small droplets of ink onto a print medium. A controller determines the amount of ink and the position of the droplets. Half-toning may be applied to determine the final optical appearance of the image. The digital image is divided into a plurality of pixels distributed over a raster or grid, wherein ink coverage per color is defined per pixel. It is known that images printed on such scanning inkjet printers may suffer from so-called banding artifacts, wherein unintended deviations in the appearance of the image extend as image-wide bands in the scanning direction.

It is known that banding may be avoided by appropriately controlling the displacement of the print medium with respect to the carriage perpendicular to the scanning direction, such that every other swath is printed overlapping a previously printed swath. A drawback of this latter print mode is a reduced productivity as well as an increased chance of print artifacts due to inaccuracies in the displacement steps. For accuracy reasons, an equal step size print mode is preferred, such as described in EP 1676710 B1. EP 1676710 B1 discloses a reduction in banding by using only a portion of the available print heads nozzles to print each swath partially overlapping its previous swath. It is further known that when applying an equal stepping print mode banding effects at the boundaries of swaths may be reduced by dividing the image into patterns of regularly repeating pixel clusters with boundaries non-parallel to the scanning direction to reduce banding effects at the edges of swaths. The application of such a mask wherein pixels are grouped together in super clusters is known from US 2015/0015626 A1. In practice the latter failed to fully resolve banding effects, in particular gloss banding. It is further known that banding may be reduced by applying dithering when processing the digital image, such that the appearance of large-scale patterns in the printed image is prevented.

### SUMMARY OF THE INVENTION

It is an object of the present invention to reduce banding effects, specifically gloss banding effects, when printing on a scanning inkjet printer.

In a first aspect of the present invention, a method for scanning inkjet printing an image is provided. The method comprises step of printing the image divided into sections with different gloss levels which vary irregularly throughout the image, such that a gloss level averaged over an area comprising a large number of said sections is substantially similar throughout the image.

It was found that gloss banding is dependent of the movement of the print head carriage, which carriage moves for the majority at a substantially constant velocity. Said velocity is however reversed every turn. Glossiness as perceived by a viewer is dependent on time differences between the jetting moments of the different areas of an image. The time period between the start of a swath and the moment of printing a specific image area varies in the scanning direction and at the turning point of the carriage the time differences between consecutive jetting moments for an area are shorter than at the opposite side. Other contributing factors may include the drying time of ink on a left side of a printed swath before reaching a curing station may be different from a drying time of a right side of said swath. The different drying times may result in different material properties or surface structures, which affect the glossiness of the respective portions, resulting in gloss differences between the left and right side. Gloss difference may further be increased by a bi-directional printing mode of the carriage wherein a printing direction is reversed after every swath. Consecutive swaths are printed as the carriage moves in respectively opposite directions. At the side where in between two consecutively printed swaths the carriage reverses direction, the time difference between depositing respective portions of a first and a second swath is relatively short as compared to the opposite side. This results in the visually contrasting glossiness effects known as gloss banding, specifically so-called "zebra banding". It is the further insight of the inventor that the above mentioned dependency may be removed by irregularly distributing the gloss levels across the band. Thereto, the image is printed in sections or areas with different gloss levels. The different gloss levels are distributed over the sections in a spatially irregular manner. Sections with similar gloss levels are positioned at a distance from one another by irregularly varying distances. For example a randomized distribution may be used. On a macroscopic scale however, the average gloss level is substantially similar or constant throughout the image. The average gloss level is therein averaged over an area comprising a number of sections, for example an area equal to 10 by 10 sections. From a sufficient distance the printed image appears to comprise a substantially constant gloss level over its entire surface, even though at a smaller scale the gloss level varies between sections. The directionally dependent gloss banding is eliminated, thereby achieving the object of the present invention.

In an embodiment, the gloss levels vary irregulary in the scanning direction, such that a spacing between sections with similar or the same gloss levels is non-constant, specifically for a row of sections in the scanning direction. The image may be formed of image-wide rows of sections extending in the scanning direction. Within a row the gloss levels vary irregularly across the scanning direction. The gloss levels are distributed across the section of a row in a for example non-repeating manner or with irregularly or nonlinearly varying distances between sections with similar gloss levels. Preferably, the gloss level distribution across the sections in the non-scanning direction perpendicular to the scanning direction is likewise irregularly.

In an embodiment, the different gloss levels are achieved by irregularly distributing the timing by which the deposition of marking material in sections is completed between different passes of the print head carriage. A predetermined total amount of marking material per section is required for each marking material used. The image is printed in multiple at least partially overlapping swaths. Each swath is printed during a respective pass of the print head carriage. The relative amount or deposition level of marking material (with respect to the total amount) deposited in a section is non-constant. In a pass a section may be filled with a first percentage of its total amount of a marking material, while its first and second neighboring sections are filled in the same pass with percentages neighbor different from said section as well as from one another. For example, a section is filled with 25% of its total yellow ink deposition, while its neighboring sections are filled with respectively 5% and 50%, all in the same pass. The deposition levels vary irregular in their distribution throughout each swath. Said distribution further differs between swaths. The deposition levels for each marking material per swath for each section add up to the total amount prescribed for said section, when summing over the predetermined number of swaths or passes for printing the image. The irregular distribution ensures that gloss differences are macroscopically uniformly distributed across the image.

In an embodiment, each printed swath is divided into a plurality of image areas, each area image area having a certain gloss level, and wherein the gloss levels of the image areas are distributed irregularly throughout each swath. The image areas together form the respective printed swath. Image area with a similar gloss level are distributed spatially irregularly over the print area. The spacing or distance between image areas of similar gloss levels for example varies between different pairs of image areas. The distance and direction of a (nearest) neighbor with similar or the same gloss level differs across various image areas.

In an embodiment, each section is printed with a near-zero deposition level during at least one of the number of passes for printing the image. The near-zero deposition level results in a very thin and nearly invisible printed 'layer', while it aids in reducing visible coalescence issues between marking materials deposited on neighboring blank and already printed sections. This 'layer' may even have a less than total surface coverage, for example when formed by several isolated droplets of marking material. The near-zero deposition level is preferably less than 10%, 7.5%, 5%, or 3% of the total deposition level for said section. The remaining deposition levels are preferably larger, for 100% divided by the number N of passes minus 1, specifically within the range of 100%/(2(N-1)) to 50%.

In an embodiment, the levels of marking material deposition are distributed irregularly across the deposition level zones in the respective swaths, which results in gloss levels of sections of the print area being distributed irregularly across the respective swaths. The timing wherein the deposition of marking material in a section is completed determines at least in part the gloss level of said section. In each of the plurality of swaths the gloss levels between sections vary irregularly in consequence of the variations in the progress of completing the total deposition of the individual sections. The number and/or position of sections exceeding a certain deposition level threshold for a marking material during a pass vary in a non-repeating manner between different passes. The irregular gloss level pattern of a first swath is preferably non-linear with respect to that of a second swath. Non-linearity may be achieved by selecting patterns which are not translation symmetric or mirror symmetric with respect to one another. It will be appreciated that one or more homogenous or regular deposition level passes may be included in the number of passes required for completing the image.

In an embodiment, the averaged gloss level distribution within a swath is substantially invariant to a starting direction of the swath. The gloss level may be controlled by the timing wherein the deposition of the sections is completed. By irregularly distributing the timing differences for reaching certain deposition thresholds between the sections an irregular gloss pattern is achieved. Preferably, this distribution is substantially invariant to the starting direction of the print head carriage for printing a swath. For example, the timing differences and gloss levels on average for a left side of the swath are similar to those of a right hand side. This may in one example be achieved by a pattern that appears locally random but macroscopically (i.e. over larger areas) constant. In an embodiment, the number of overlapping passes for forming a portion of the image is an odd number, wherein starting direction of neighboring portions of the image alternate between a left and right side of the image (with respect to the scanning direction).

In an embodiment, the gloss levels are dimensioned and distributed to achieve a substantially constant gloss level averaged over larger areas of the print area, said larger areas preferably comprising at least 5, 10, 15, 20, and/or 25 sections of the print area.

In an embodiment, for a plurality of deposition level zones a level of marking material deposition of a first neighboring deposition level zone is different from that of second neighboring deposition level zone. The irregular distribution may be achieved by locally varying the deposition levels deposited in a section during a pass, such that several or a majority of sections have at least two neighbors with different deposition levels with respect to one another. Specifically, the difference in deposition level between said sections and its neighbors is different with respect to at least two of its neighbors. The above applies within a single pass, though the relative deposition level further differs between swaths: the difference in deposition level between said sections and one or more of its neighbors is different between two or more passes.

In an embodiment, the relative positioning of deposition level zones of the same or similar level of marking material deposition is different in each of the plurality of passes. The distribution levels which determine the relative level wherein each section is completed for different passes are for example non-symmetric with respect to one another. Preferably, the deposition levels in each pass are distributed to achieve a random appearance up close, but from a sufficient distance the gloss level appears to be substantially constant across the image.

In an embodiment, the levels of marking material deposition are distributed irregularly across the deposition level zones in the respective swaths, such that time differences between neighboring deposition level zones exceeding a certain deposition threshold level relative with respect to a final deposition level for each marking material in each section of the print area vary irregularly throughout the swath. The different gloss levels are achieved by varying the timing wherein sections reach respective levels of completion with respect to the total amount of marking material deposition required for said section in the image. It will be appreciated that the final pass may be used to complete the deposition for all sections, though the relative deposition levels in the last swath vary irregularly as a result of the irregular variation in the previous swaths. For example, a number of sections may exceed a halfway complete deposition level threshold (i.e. 50% of the total amount for said section) in one pass, while one or neighbors of said section exceed said threshold in different passes. In particular, a number of sections may exceed said threshold in one pass after one or more of their respective neighbors have exceeded said threshold on a previous pass, while one or more different neighbors exceed said threshold in a later pass.

In an embodiment, the timing differences are proportional to gloss differences between deposition level zones, such that gloss levels of sections of the print area vary irregularly through the swath. In an embodiment, the low deposition level zones are dimensioned and positioned to overlap the same sections of the print area in each of the plurality of passes. In an embodiment, at least three different levels of marking material deposition for at least one marking material are applied within a swath, preferably at least four different levels of marking material deposition, and very at least preferably five different levels of marking material deposition. In an embodiment, the swath data sets comprise a near-zero deposition level zone for each section of the print area in at least one of the swaths, in which near-zero deposition level zone one the level of marking material deposition is significantly less than in the remaining deposition level zones. In an embodiment, the method further comprises the step of processing image data corresponding to the image portion to determine a total deposition level for each marking material for each section of the print area, and wherein the levels of marking material deposition applied in the deposition level zones are relative with respect to the respective total deposition levels for each section of the print area.

In an embodiment, the method further comprises the steps of:
- printing a first predetermined pattern of sections for forming the image during a first pass of a print head carriage over a print medium to print a first swath, wherein low level deposition areas, wherein significantly less marking material is deposited than in said sections, are interposed between said sections;
- printing further predetermined patterns of sections during their respective further passes of the print head carriage to print further swaths at least partially overlapping the first swath, wherein low level deposition areas are interposed between said sections, wherein the further patterns differ from the first pattern, such that differences in marking material completion levels relative to a respective final level of marking material of a respective section between a section printed in the first pass and a neighboring section printed in at least one of the further passes varies irregularly throughout the image. A pattern of sections comprising low level deposition areas are prestored or generated prior to printing the image for each swath. The pattern defines for each section a deposition level for each marking material to be printed in said section in the respective swath. The deposition levels are defined relative to the total or final deposition level (e.g. 25% of the total amount (100%) of cyan ink, etc.). The pattern of each the respective swaths further comprises low level deposition areas wherein significantly less marking material is deposited than in the sections. The low level deposition areas are for example near zero level deposition area with a relative marking material level close to zero percent, for example less than 10 or 5 percent of the total deposition level for a for a marking material in a section in the completed image (which is the sum of what is deposition in said section during the respective passes). The low level deposition areas are distributed geographically irregularly throughout the pattern. Further, the deposition levels of the section may be geographically distributed geographically irregularly to provide additional variation or irregularity. In consequence, the completion levels of the respective sections will vary geographically after each printed pattern.

In an embodiment, the method further comprises the steps of:
- printing a first predetermined pattern of image areas for forming a band (or image portion) of an image during a first pass of the carriage over a print medium to print a first swath, wherein non-printing areas are interposed between printed image areas;
- printing further predetermined patterns of image areas during their respective further passes of the carriage to print further swaths, wherein non-printing areas are interposed between printed image areas,
wherein the further patterns differ from the first pattern, such that a printing time difference between printing an image area in the first pass and printing a neighboring image area in at least one of the further passes varies irregularly throughout the band. Preferably, the predetermined patterns are generated by or stored on the controller based on image data received via the user interface. The patterns may define a grid of sections or area with a total area equal to that of the respective swath. The patterns are printed in an at least partially overlapping manner to form a band of the image. The grid areas in one pattern may fully or partially overlap with grid one or more areas from another pattern. For each physical region of the band printed on the print medium the sum of the deposition levels for each individual marking material deposited in sections or as low level deposition areas overlap said physical regions equal the total amount of the respective marking material to be deposited in said region as determined by the controller from the image data. For each physical section the deposition levels for each marking material sum up to 100% of what is required to print the image.

In an embodiment, the method further comprises the step of printing a swath in each of the number of passes of passes of a print head carriage over a print area on a print medium, which swaths are overlapping to form an image portion, which swath in a plurality of the passes is spatially divided into a plurality of deposition level zones, wherein a plurality of deposition zones define a level of marking material deposition that is different between said deposition zone and its neighboring zones, wherein in that the levels of marking material deposition are distributed irregularly across the deposition level zones in the respective swaths.

In an embodiment, the method comprises the steps of:
- printing a first swath divided by a first predetermined pattern into image areas being printed with deposition levels which vary irregularly throughout the first swath;
- printing further swaths each divided by a respective further predetermined pattern into image areas being printed with deposition levels which vary irregularly throughout the respective further swath, wherein the further patterns differ from the first pattern, such that a printing time difference for exceeding a certain deposition level threshold between an image area in the first pass and printing a neighboring image area in at least one of the further passes varies irregularly throughout the image portion. The respective patterns which define the different image areas forming the swath as well a deposition level for each image area are determined by the controller. The patterns are different for several passes, such that the respective deposition level distributions for those swaths are non-identical. Those deposition level distributions are preferably non-repeating, non-symmetric, and/or non-shifted with respect to one another. The deposition level distributions are however such that the sum of the deposition levels for each image area over the number of passes required for printing the image portion equals the total or 100% deposition determined from the image data.

In an embodiment, the irregular variation of the gloss levels across the different sections or areas may be achieved by distributing the positions and/or sizes of the low level deposition zones in a non-linear distribution across the respective swath or print area. This irregularity in the spatial distribution of the low level deposition zones provides a degree of freedom which allows the time periods wherein sections or areas in a swath are printed to be varied across the full width of the swath. By providing sufficient variation in said printing time differences between adjacent areas, the glossiness variation may be macroscopically distributed over the image such that it appears to a viewer to be substantially constant or even across the full image, at least at a sufficiently large distance from the image. The irregular spatial distribution of the low level deposition zones thus allows the time periods for printing an area to be discontinuously or irregularly distributed across the swath or print area at a microscopic level in such a way that a macroscopically constant glossiness appearance is achieved over the full image or at least the respective band formed by the overlapping swaths. Low level deposition is preferably defined as less than 10% of the total deposition of one marking material (or for several or all marking materials combined), very preferably as less than 7%, even more preferably less than 5%, much more preferably less than 3%, and in a specific example 0%.

In an embodiment, a sum of two selected from the group of the first pattern and the further patterns comprises non-printing areas at least partially non-overlapping by the image areas printed in the selected two patterns. The two selected patterns are non-complementary, such that a total deposition or surface coverage of the printed areas is not achieved by combining said patterns (i.e. it is less than 100% of the total deposition determined from the image data). Low deposition level areas remain when superposing the swaths formed by the two selected passes. Preferably, the two selected patterns differ from one another in a non-inverted manner. Not all low level deposition areas in one of the patterns are to be printed on in the second pattern and/or vice versa. Together the patterns required for forming a band of an image are complementary, such that all patterns superposed form the band. Every area portion of the band (or a print area of the print medium) overlaps in at least one of the patterns with a low level deposition area. The sizes and/or positions of the low level deposition areas are distributed irregularly throughout the different patterns. A plurality of different distances between neighboring low level deposition areas measured in e.g. the scanning and/or non-scanning direction may be applied within a pattern. Further, said neighbor distance may be distributed differently between different patterns, resulting in a different relative positioning of the low level deposition areas as well as the image areas. It will be appreciated that the above described irregularity may also apply to other deposition level values, for example the pattern of image areas exceeding e.g. 50% of their total deposition level for one or more marking materials in one swath is irregularly different from that in a second swath.

In an embodiment, the further patterns are non-symmetric and/or asymmetric with respect to the first pattern. The further patterns are preferably not inversion symmetric, mirror symmetric, and/or translation symmetric with respect to the first pattern. The further patterns comprise a spatial distribution of the non-printing areas which is non-linear with respect that of the first pattern. Preferably, no linear correlation exists between size and/or position distributions of the non-printing areas of the first and further patterns. Preferably, all patterns are asymmetric with respect to one another, specifically translationally and/or inversionally asymmetric.

In an embodiment, the first and further patterns define a low level deposition section for each area of a swath, wherein positions of said low level deposition areas vary nonlinearly in the scanning direction. The position of a low level deposition area may be defined by e.g. its starting edge or center. The spacing between the centers of the low level deposition areas is preferably non-constant. A single swath or pattern may comprise a plurarity (preferably three or more) of different spacings between centers measured in e.g. the scanning or non-scanning direction. It will be appreciated that the above described irregularity may also apply to other deposition level values, for example the pattern of image areas exceeding e.g. 75% of their total deposition level for one or more marking materials in one swath is non-repeating with respect to that in a second swath

In an embodiment, the printing time differences between neighboring areas printed in different swaths vary irregularly by non-periodically varying or changing the distance between centers of areas which exceed the same deposition level threshold in the same pass. For example, in the scanning and/or non-scanning direction the distance between the centers (or another suitable reference point) between two directly neighboring low level deposition areas non-periodically or non-repeatingly varies along said direction. The distance increases and decreases in a non-linear manner in said direction. As such the irregular patterns are formed. For example, the pattern forming the swath may be considered to be formed of rows extending in the scanning direction. The distances between centers of low level deposition areas are different for a plurality of the rows (or even for each row). Like the patterns, two or more rows of each pattern are non-symmetric. The rows are irregular, such that for example a first row cannot be positionally shifted to fully overlap or complement the image areas and/or low level deposition areas of a second row. Again, the above applies to any deposition level threshold. For example, the spacings between areas exceeding a 33% deposition level threshold in a single pass vary non-periodically within said swath (and preferably between different swaths as well).

In an embodiment, the direction and spacing of (nearest) neighbors of areas exceeding the same deposition level threshold varies irregularly in a single pass or swath. Said direction and spacing with respect to a first neighbor for example differs from that with respect to a second neighbor. Similarly, said direction and spacing with respect to a nearest neighbor which may be different between a plurality (e.g. 3, 5, 10 or more) areas exceeding the same deposition level threshold in the same pass. In an embodiment, the low level deposition areas are irregularly spaced apart from one another by a low level deposition positional distribution of the low level deposition areas. The spacing between neighboring low level deposition areas in a pass is non-linear with respect to their position in the image or band in the scanning and/or non-scanning direction (e.g. with respect to a distance from an edge of the image). For example, the spacing between low level deposition areas varies irregularly in the scanning direction and/or non-scanning direction, such that said spacings vary in a non-linear manner. Smaller spacings are non-periodically alternated by larger spacings in the respective scanning and non-scanning directions. The low level deposition areas may further be irregularly distributed by varying the dimensions of the low level deposition areas, such as the width spacing.

In another embodiment, the spacing between neighboring low level deposition areas and/or their width spacing varies in the scanning and/or the non-scanning direction, such that for a row of sections extending in the scanning direction printing time differences between printing a section and printing its neighboring section in the scanning and/or non-scanning direction vary non-linearly with the respective position on the print medium or in the image. It is the insight of the inventor that the printing time differences between sections neighboring across a boundary line which forms a bottom line of a printed swath or pass vary substantially linearly with said position if swaths are printed without low level deposition areas. Aside from some acceleration effects at the edges, the carriage velocity is substantially constant across the pass. The bottom row of sections is printed neighboring a row of sections printed in a previous swath. The printing time difference in this paragraph is the time difference between the printing of a section in the present pass and a previously printed neighboring section positioned outside the present swath but (partially) overlapping with said section in the present pass when viewed in the scanning direction, for example its nearest neighbor in the completed image. This time difference increases linearly with the position in the scanning direction when measured from the side where carriage started printing the present pass. This linear dependency is reversed when the carriage prints a further swath, which results in gloss banding. By irregularly positioning low level deposition areas in between the printed areas of the pass, the above described linearity is interrupted. By irregularly redistributing the printing time differences across the band, the described linearity may be sufficiently reduced such that it appears no longer visible to the human eye. The irregular distribution of low level deposition areas results in an irregular variation in the printing times of the image areas in the respective passes. This yields a variation in the printing time differences between a section and its neighbors. The gloss differences between neighbors thus vary in a similarly irregular manner. By selecting a sufficient level of irregularity and suitable dimensions of the sections and non-printing areas an apparently constant gloss level for the human eye may be achieved.

In an embodiment, a distance between a reference point of neighbors of low level deposition areas and/or printed areas printed in one swath varies irregularly throughout the swath, preferably in the scanning and/or non-scanning direction. In a direction, the distance between a first pair of neighbors is different from a second pair. A third pair may further comprise an inter-neighbor distance different from the first and second pairs. In a different row of sections in the same direction the same distances as between the first, second, and thirds pairs may be present but in a different order. In an even further parallel row the relative order in said direction may be different from the first two rows. The reference point may be the center of a section, for example its center of mass or area. Other suitable reference points such as corners may be applied. The reference point distance between nearest neighbors exceeding the same deposition level threshold in the same pass is non-constant, such that a single pass preferably comprises at least three different distances, very preferably at least four different distances, even more preferably at least five different distances. Distances between (nearest) neighbors may extend in any direction due to the irregular distribution of the different areas. In an embodiment, within a pass at least three different distances between a center of neighbors of low level deposition areas and/or section exceeding the same deposition level threshold printed are provided.

In an embodiment, the low level deposition areas vary in size and/or position, such that the low level deposition areas are positioned in an irregular distribution or pattern over the width of the band. In consequence in the printed band multiple sections are surrounded by neighboring sections with different gloss levels. The gloss level distribution between the different neighboring sections is different for each of said multiple sections. Specifically, the gloss level distribution over the neighbors of sections having the same lateral position in the scanning direction (but different positions in the non-scanning direction) varies in an irregular manner. Preferably, a gloss level distribution across neighbors of a first section is not the same as for a second section at the same lateral position as the first section, at least within a printed swath or band. Such a gloss level distribution may be achieved by irregularly varying the spacing width and/or positions of the low level deposition areas.

In an embodiment, a variation in the spacing between neighboring low level deposition areas is non-constant across a plurality of image areas in the band and/or first and further patterns. The print head carriage moves reciprocally at a substantially constant velocity over the print medium. A non-constant spacing width variation or distribution prevents gloss banding by providing an irregular distribution of the print time periods of the sections over the printed band. When a regular pattern, such as a checkboard pattern, wherein the low level deposition areas are formed by the white spaces, is used, gloss banding remains visible in the final product. The drawback of a regular pattern is that it translates the directional dependence between the printing time periods of sections and gloss banding into the regularly patterned swath, including the directional reversal of said dependence between consecutive swaths. In consequence gloss banding will remain visible when a regular pattern is applied. An irregular pattern of low level deposition areas prevents gloss banding by redistributing the printing time periods irregularly over the image or band. An irregular distribution or pattern is in one example defined by a non-constant spacing width variation per unit length along the scanning direction. Preferably, the spacing width variation is discontinuous or irregular in the scanning direction. The spacing width for example may be a position function defining the positions of the low level deposition areas. The spacing between low level deposition areas may be varied in a similar manner. At least the second order derivative (e.g. with respect to the time or carriage position) is non-constant, for example a polynomial function. It will be appreciated that the above may also by applied when applying a non-constant spacing between sections exceeding the same deposition level threshold in the same pass.

In an embodiment, the low level deposition areas are distributed irregularly over the image area and the different passes or patterns, such that an average of time differences between the printing of neighboring section in a first width portion of the completed band is substantially equal to an average of time differences between the printing of neighboring sections in a second width portion of the completed band positioned outside the first width portion. Preferably, said width portion comprises a width at least a quarter of the full width of the band or at least 10 image areas counted along the scanning direction.

In an embodiment, the method according to the present invention further comprises the step of moving the print medium with respect to the print head carriage a predetermined step distance in a longitudinal direction perpendicular to a scanning direction of the print head carriage direction in between printing consecutively printed swaths. The print medium moves in the non-scanning direction, which non-scanning direction lies within the plane of the print medium and is perpendicular to the scanning direction. For roll printers this movement comprises pushing or pulling the print medium over the medium support surface, while for flatbed printers the carriage with its guide beam is moved a step distance over the print medium. Preferably, the step distance in the moving step is constant or the same between all passes required for completing the band. Operating in a so-called equal step mode improves the robustness for media steps errors, which result from inaccuracies in the positioning of the driving mechanism which moves the print medium with respect to the carriage in the non-scanning direction. Such an equal step mode offers further advantages such as improved mixing of print head color profiles and a reduction of the visibility of swath edges in the final image.

In an embodiment, a consecutive swath is printed partially overlapping a previously printed swath. The print medium is moved with respect to the carriage in the scanning direction in between passes, preferably by a substantially constant step distance. The displacement is less than a maximum length of the swath in the non-scanning direction, such that a printed swath is partially positioned in the path of a subsequent pass or swath.

In an embodiment, in the final pass for completing the band comprises printing sections interposed with low level deposition areas. The first and the last pass both comprise low level deposition areas, which are irregularly distributed such that each area portion in the band is not printed on in at least one of the passes required for printing the band.

In an embodiment, the sides of the sections are chaffered. The sections are preferably substantially rectangular with one side extending parallel to the scanning direction. The edges of the sections are irregular, comprising protrusions and recesses which are dimensioned to fittingly be received and receive protrusions and recesses from neighboring sections. The positions, shapes, widths, heights, and/or depths of the protrusions and recesses are preferably irregularly distributed along the edges. This improves optical blending of the edges of the sections to a viewer.

The present invention further relates to a scanning inkjet printer comprising:
- scanning inkjet carriage holding a plurality of print head reciprocally translatable over a medium support surface;
- an image receiving unit configured for receiving image data defining an image portion;
- a image data processing unit for processing the image data;
- a swath data set generator configured to define a plurality of swath data sets, which swath data sets are configured to yield the image portion after having been printed in an at least partially overlapping manner,
- an irregular gloss level distributor configured to divide a print area defined by a swath data set into deposition level zones, wherein a plurality of deposition zones define a level of marking material deposition that is different between said deposition zone and its neighboring deposition level zones, characterized in that the deposition level zone divider distributes levels of marking material deposition irregularly across the deposition level zones in the respective swath data sets. The printer is configured to print swaths divided into image areas with different gloss levels, which are distributed spatially irregularly through-out the swath. By spreading the gloss levels a macroscopically homogeneous gloss appearance may be achieved. In another aspect the present invention provides a non-transitory computer-readable storage medium storing game program which causes a controller to execute the method according to the present invention. In a further aspect, the present invention provides a print medium comprising an inkjet printed image formed of sections with varying gloss levels which gloss levels are distributed irregularly through the image, such that the average gloss level over an area comprising a number of sections is substantially constant throughout the image.

The present invention further relates to a scanning inkjet printer configured to perform the method according to the present invention. Such a printer may be a flatbed or roll printer comprising a print head carriage translatable along a beam extending over the medium support surface. The printer comprises a control unit which has a memory storing predetermined image area pattern distribution determining means. Said means form a reference to which image data from a print job may be compared to divide the image data into sections comprising low level deposition areas which are distributed in an irregular manner across the width of the image and the different passes for printing the image. As explained above, said means may be a predetermined pattern, for example a stochastic distribution, which distributes the low level deposition areas spatially over a grid as well as over different passes. Alternatively, a random parameter generator or a sufficiently varying mathematical function may be applied. Said means are applied to the image data to form an irregular distribution of low level deposition areas across the different swath as described above. The control unit is further configured for moving the carriage with respect to the medium support surface in the non-scanning direction, preferably with substantially equally sized steps, wherein consecutive swath are printed partially overlapping a previously printed swath.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying schematical drawings which are given by way of illustration only, and thus are not limitative of the present invention, and wherein:
Fig. 1A is a schematic perspective view of a printing system according to the present invention;
Fig. 1B is a schematic perspective view of an inkjet printing assembly the printing system in Fig. 1A;
Fig. 2 is a schematic diagram of an environment comprising a reprographic system;
Fig. 3 is a schematic representation of a control unit for the printing system in Fig. 1A and/or Fig. 2;
Fig. 4A-B is a schematic representation of a control unit in Fig. 3 processing image data for performing a print job on the printing system in Fig. 1;
Fig. 5A-D represent consecutive swath when printing a band of an image according to the present invention;
Fig. 6 is a schematic illustration of the irregular printing pattern according to the present invention applied in different passes;
Fig. 7 is an enlarged representation another irregular printing pattern according to the present invention applied in different passes;
Fig. 8 is a schematic representation of the image area pattern distribution determining means; and
Fig. 9 is a schematic representation of the image area pattern distribution determining means of Fig. 8 on a larger scale.

### DETAILED DESCRIPTION OF THE DRAWINGS

The present invention will now be described with reference to the accompanying drawings, wherein the same reference numerals have been used to identify the same or similar elements throughout the several views.

### Printing system

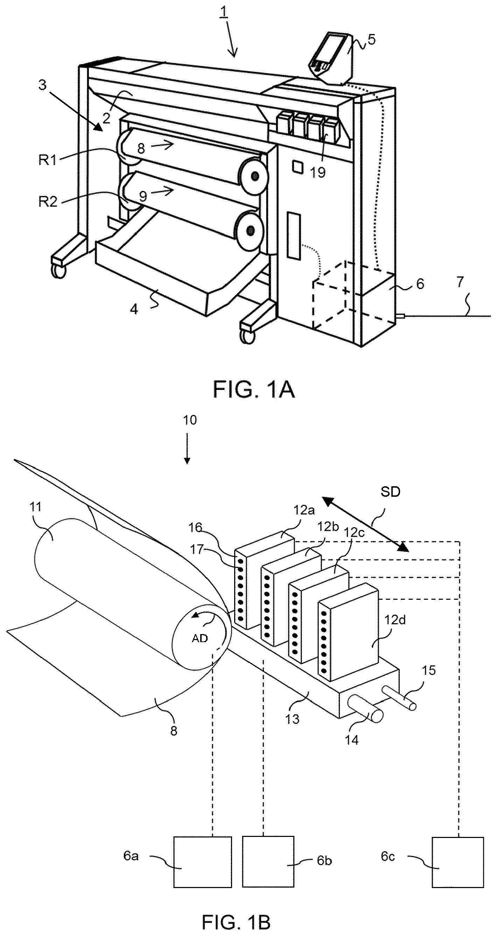

Fig. 1A shows an image forming apparatus 1, wherein printing is achieved using a wide format inkjet printer. The wide-format image forming apparatus 1 comprises a housing 2 holding the printing assembly 10. The image forming apparatus 1 also comprises at least one media input unit 3 for storing one or more media 8, 9 in the form of a wound-up roll of web medium. The media 8, 9 are supplied by a roll 8, 9. The roll 8 is supported on the roll support R1, while the roll 9 is supported on the roll support R2. A transport path extends from the media input unit 3 along the printing assembly 10 to a receiving unit 4 to collect the medium 8, 9 after printing. A storage unit 19 for marking material is provided to hold marking materials. Each marking material for use in the printing assembly 10 is stored in one of a plurality of containers 19 arranged in fluid connection with the respective print heads for supplying marking material to said print heads to print an image on the medium 8, 9. The receiving unit 4 may comprise a take-up roller for winding up the printed medium 8, 9 or a receiving tray for supporting sheets of printed medium 8, 9. Optionally, the receiving unit 4 may comprise processing means for processing the medium 8, 9 after printing, e.g. a post-treatment device such as a coater, a folder or a puncher. The wide-format image forming apparatus 1 furthermore comprises a user interface 5 for receiving print jobs and optionally for manipulating print jobs. The local user interface unit 5 is integrated to the print engine and may comprise a display unit and a control panel. Alternatively, the control panel may be integrated in the display unit, for example in the form of a touch-screen control panel. The local user interface unit 5 is connected to a control unit 6 connected to the image forming apparatus 1. The control unit 6, for example a computer, comprises a processor adapted to issue commands to the image forming apparatus 1, for example for controlling the print process. The image forming apparatus 1 may optionally be connected to a network N. The connection to the network N is diagrammatically shown in the form of a cable 7, but nevertheless, the connection could be wireless. The image forming apparatus 1 may receive printing jobs via the network N. Further, optionally, the control unit 6 of the image forming apparatus 1 may be provided with a USB port, so printing jobs may be sent to the image forming apparatus 1 via this USB port.

### Printing assembly

Fig. 1B shows an ink jet printing assembly 10. The ink jet printing assembly 10 comprises a medium support surface to support the medium 8, 9 during printing. The medium support surface in Fig. 1B is provided on a platen 11 in the form of a drum rotatable in SAD, but may, alternatively, be a flat support surface. The medium support surface is preferably provided with suction holes for at least temporarily holding the medium 8, 9 in a fixed position with respect to the medium support surface. The ink jet printing assembly 10 comprises print heads 12a - 12d, mounted on a scanning print carriage 13, or alternatively as a stationary page-wide array. The scanning print carriage 13 is guided by suitable guides 14, 15 to move in reciprocation in the main scanning direction SD. Each print head 12a - 12d comprises an orifice surface 16, which orifice surface 16 is provided with at least one orifice 17. The print heads 12a - 12d are configured to eject droplets of marking material onto the medium 8, 9. The medium support surface, the carriage 13 and the print heads 12a - 12d are controlled by suitable controlling means 6a, 6b and 6c, respectively.

The medium 8, 9 is supplied in web form and may be composed of e.g. paper, cardboard, label stock, coated paper, plastic or textile. The medium 8, 9 is moved in the sub-scanning SAD by the platen 11 along four print heads 4a - 4d provided with a fluid marking material.

A scanning print carriage 13 carries the four print heads 12a - 12d and may be moved in reciprocation in the main scanning direction SD parallel to the medium support surface, such as to enable scanning of the medium 8, 9 in the main scanning SD. Any number of print heads may be employed. Preferably, at least one print head 12a - 12d per color of marking material is placed on the scanning print carriage 13, for example one for print head 12a - 12d for each of the applied colors, usually black, cyan, magenta and yellow is present. Often, in a full-color printer, black marking material is used more frequently in comparison to differently colored marking material. Therefore, more print heads 12a - 12d containing black marking material may be provided on the scanning print carriage 13 compared to print heads 12a - 12d containing marking material in any of the other colors. Alternatively, the print head 12a - 12d containing black marking material may be larger than any of the print heads 12a - 12d, containing a differently colored marking material.

The carriage 13 is guided by guides 14, 15 in the form of guide rails or rods 14, 15, as depicted in Fig. 1B. The carriage 13 may be driven along the guides 14, 15 by a suitable driving actuator (not shown). An alternative is to move the medium 8, 9 in the main scanning direction SD.

### Print heads

Each print head 12a - 12d comprises an orifice surface 16 having at least one orifice 17, in fluid communication with a pressure chamber containing fluid marking material provided in the print head 12a - 12d. On the orifice surface 16, a number of orifices 17 is arranged in a single linear array parallel to the sub-scanning SAD. Eight orifices 17 per print head 12a - 12d are depicted in Fig. 1B, however obviously in a practical embodiment at least several hundreds of orifices 17 may be provided per print head 12a - 12d, optionally arranged in multiple arrays. As depicted in Fig. 1B, the respective print heads 12a - 12d are placed parallel to each other such that corresponding orifices 17 of the respective print heads 12a - 12d are positioned in-line in the main scanning direction SD. This means that a line of image dots in the main scanning direction SD may be formed by selectively activating up to four orifices 17, each of them being part of a different print head 12a - 12d. This parallel positioning of the print heads 12a - 12d with corresponding in-line placement of the orifices 17 is advantageous to increase productivity and/or improve print quality. Alternatively multiple print heads 12a - 12d may be placed on the print carriage adjacent to each other such that the orifices 17 of the respective print heads 12a - 12d are positioned in a staggered configuration instead of in-line. For instance, this may be done to increase the print resolution or to enlarge the effective print area, which may be addressed in a single scan in the main scanning direction. The image dots are formed by ejecting droplets of marking material from the orifices 17.

Upon ejection of the marking material, some marking material may be spilled and stay on the orifice surface 16 of the print head 12a - 12d. The ink present on the orifice surface 16, may negatively influence the ejection of droplets and the placement of these droplets on the medium 8, 9. Therefore, it may be advantageous to remove excess of ink from the orifice surface 16. The excess of ink may be removed for example by wiping with a wiper and/or by application of a suitable anti-wetting property of the surface, e.g. provided by a coating.

### Control

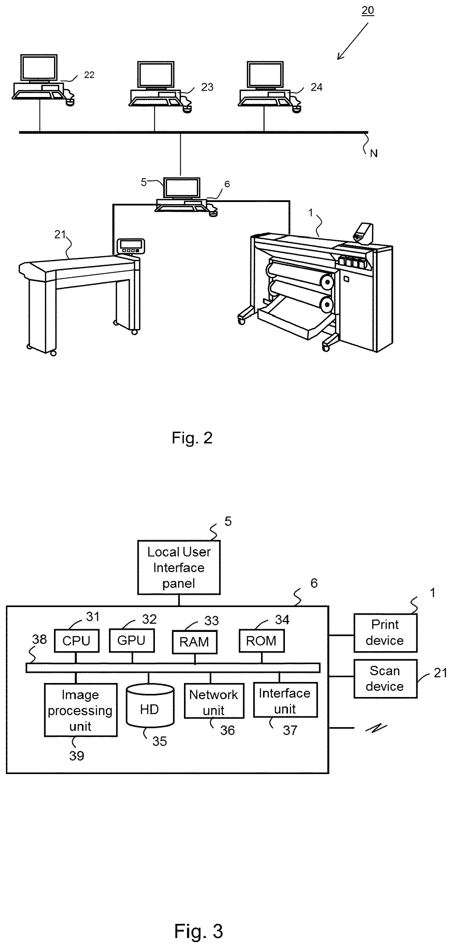

Fig. 2 is a schematic diagram of an environment which comprises a reprographic system 20. The reprographic system 20 as presented here comprises the printing system 1 with its control unit 6 depicted as a computer device 6. The control unit 6 is connected to a network N, so that a number of client devices 21 - 24, also connected to the network N, may make use of the printing system 1. Such client devices may include client computers 22 - 24 or a scanning device 21. The control unit 6 executes various tasks such as receiving input data from the client devices 21 - 24, handling and scheduling data files, which are submitted via the network N, controlling the printing system 1, converting image data into printable data etc. The control unit 6 is provided with a user interface panel 5 for offering the operator a menu of commands for executing tasks and making settings.

An embodiment of the control unit 6 is in more detail presented in Fig. 3. As shown in Fig. 3, the control unit 6 comprises a Central Processing Unit (CPU) 31, a Graphical Processor Unit (GPU) 32, a Random Access Memory (RAM) 33, a Read Only Memory (ROM) 34, a network unit 36, an interface unit 37, a hard disk (HD) 35 and an image processing unit 39 such as a Raster Image Processor (RIP). The aforementioned units 31 - 37 are interconnected through a bus system 38. However, the control unit 6 may also be a distributed control unit.

The CPU 31 controls the printing system 1 in accordance with control programs stored in the ROM 34 or on the HD 35 and the local user interface panel 5. The CPU 31 also controls the image processing unit 34 and the GPU 32.

The ROM 34 stores programs and data such as boot program, set-up program, various set-up data or the like, which are to be read out and executed by the CPU 31.

The hard disk 35 is an example of a non-volatile storage unit for storing and saving programs and data which make the CPU 31 execute a print process to be described later. The hard disk 35 also comprises an area for saving the data of externally submitted print jobs. The programs and data on the HD 35 are read out onto the RAM 33 by the CPU 31 as needed. The RAM 33 has an area for temporarily storing the programs and data read out from the ROM 34 and HD 35 by the CPU 31, and a work area which is used by the CPU 31 to execute various processes.

The interface unit 37 connects the control unit 6 to the client devices 21 - 24 and to the printing system 1.

The network unit 36 connects the control unit 6 to the network N and is designed to provide communication with the workstations 22 - 24, and with other devices 21 reachable via the network N.

The image processing unit 39 may be implemented as a software component running on an operation system of the control unit 6 or as a firmware program, for example embodied in a field-programmable gate array (FPGA) or an application-specific integrated circuit (ASIC). The image processing unit 39 has functions for reading, interpreting and rasterizing the print job data. Said print job data contains image data to be printed (i.e. fonts and graphics that describe the content of the document to be printed, described in a Page Description Language or the like), image processing attributes and print settings.

### Basic mode of operation

With the electric signals corresponding to the primary colours red (R), green (G) and blue (SD) obtained during scanning, a digital image is assembled in the form of a raster image file. A raster image file is generally defined to be an array of regularly sampled values, known as pixels. Each pixel (picture element) has at least one value associated with it, generally specifying a colour or a shade of grey which the pixel should be displayed in. For example, the representation of an image may have each pixel specified by three 8 bit (24 bits total) values (ranging from 0 - 255) defining the amount of R, G, and B respectively in each pixel. In the right proportions, R, G, and B can be combined to form black, white, shades of grey, and an array of colours.

The digital image obtained by the scanning device 21 may be stored on a memory of the control unit 6 and be handled according to a copy path, wherein the image is printed by the printing system 1. Alternatively, the digital image may be transferred from the control unit 6 to a client computer 22 - 24 (scan-to-file path). A user of the client computer 22 - 24 may decide to print a digital image, which reflects the printing mode of operation of the printing system 1.

### Print operation

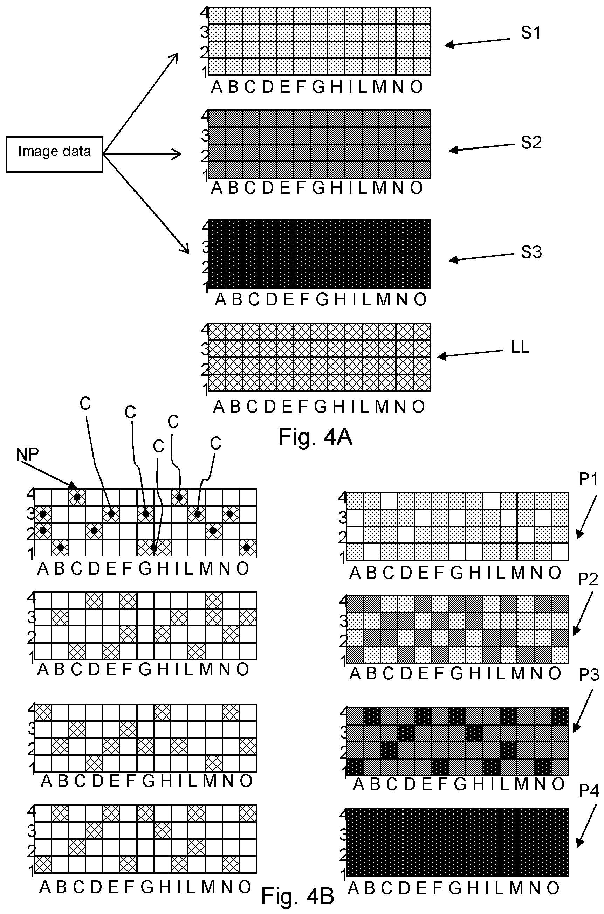

Fig. 4A illustrates the image processing executed by the control unit 13. Image data defining an image (or a band or portion thereof) to be printed is retrieved from a print job. The control unit 13 in correspondence with predefined preference or settings proceeds to process the image data to form a suitable control scheme for printing said image. In the example in Fig. 4A, the control unit 13 has determined a number of passes or swaths S1-S3 required for printing the image. In the given example, the image is to be formed by three consecutively printed swaths S1-S3, wherein in each swath S1-S3 several area portions of the print medium 8 are covered by a predefined amount of ink of a predefined ink type. While Fig. 4A illustrates three swaths S1-S3 any integer number may be applied. The control unit 13 further proceeds to rasterize the image into pixels. The pixels are then grouped together into image areas or super clusters (indicated horizontally by letters A-O and vertically by numbers 1-4). An image area A1-O4 preferably comprises at least one pixel. Consequently, the control unit 13 distributes the ink coverage of the respective swaths S1-S3 over said image areas A1-04. Additionally, the control unit 13 for a plurality of image areas A1-O4 defines a corresponding low level deposition area LL, wherein the relative deposition of marking material is significantly less than in the other swaths S1-S3, for example 3% of the total marking material deposition for an area. In the preferred embodiment in Fig. 4A, an equally sized and positioned low level deposition area LL is defined for each image area A1-O4. An image area as well as a low level deposition area is preferably sufficiently large to prevent ink from neighboring printed image areas from flowing into and at least partially covering said image area or low level deposition area. Preferably, these areas are dimensioned sufficiently small such that these are not visible to a user at the intended viewing distance from the image.

As explained above, gloss banding is caused by the printing timing differences between image areas A1-O4 varying in a repeating manner across the image. This regularity is removed by irregularly inserting the low level deposition areas LL into the different swath S1-S3. The low level deposition areas LL in a pass P1-P4 are irregularly spaced apart from one another in both the scanning and the non-scanning directions SB, SA. This increases the number of passes P1-P4 required for printing the image by at least one, as shown in Fig. 4B. The left and right hand side in Fig. 4B represent the same band of the image. The left hand side of Fig. 4B indicates which of the image areas A1-O4 are non-printing areas NP in the respective pass P1-P4. The geographical distribution of the low level deposition areas LL is irregular, such that the distance between neighboring low level deposition areas varies in a non-constant manner, preferably in both the scanning SD and the non-scanning SA. Fig. 4B indicates the centers C of several low level deposition areas E3, G1, G3, 14, L3. The distance between neighboring centers C differs between pairs of neighboring low level deposition areas LL. For example, the center spacing between low level deposition areas G3 and L3 is twice as large as the center spacing between low level deposition areas G3 and E3. The center spacing between A3 and E3 is even larger. In the scanning direction SD Fig. 4B comprises at least three different sizes of center spacings. A similar variation may be applied in the non-scanning direction. In consequence of the irregular distribution, the relative deposition completion levels between neighboring image areas A1-O4 are also irregular. For example, the image areas which have exceeded the 33% deposition level (light grey color) in the top right figure in Fig. 4B form an irregular pattern different from the pattern of the image areas which have exceeded 33% (and are below 66%) in the figure below that. Likewise, the pattern of image areas exceeding 66% (grey color) is different from the previously mentioned patterns. All those patterns differ from the pattern showing the image areas with (near) complete deposition levels (drak grey) in the 3^{rd} swath P3. The dependency between the carriage movement and the printing time differences is thereby removed, reducing gloss banding. By low deposition level printing of certain image areas A1-O4 in an irregular manner, the printing times of image areas A1-O4 are redistributed in a correspondingly irregular manner across the image. In consequence, gloss differences between neighboring image areas A1-O4 also vary irregularly. Since the image areas A1-O4 are relatively small, this results in a macroscopically constant gloss level across the entire image or band.

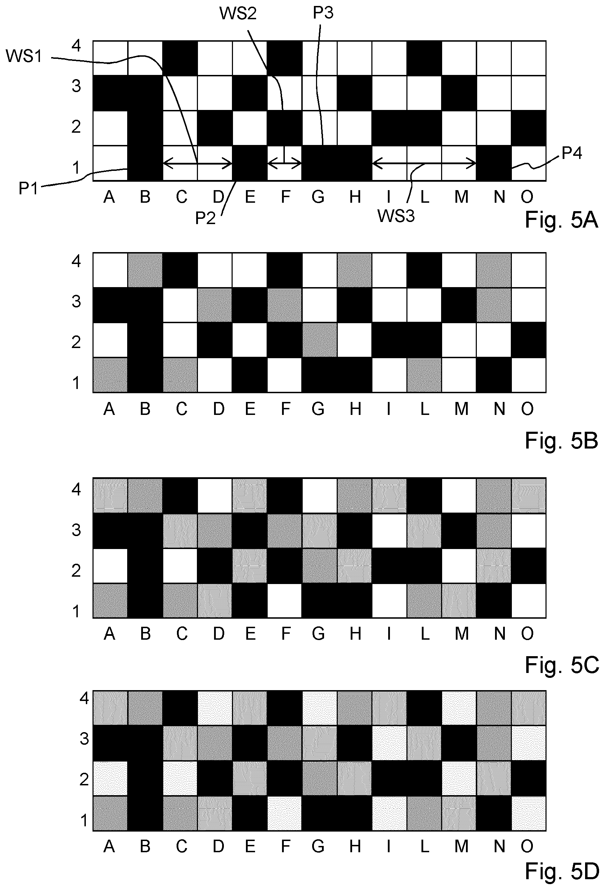

Figs. 5A-D represent another example of a mask as may be applied by the control unit 6. In this example the low level deposition areas are non-printing areas, wherein the relative deposition level is 0%. It will be appreciated that a different low level deposition, such as 1%, 3%, 5%, etc. may also be applied. The image or a portion thereof is divided into a number of image areas or super clusters, each consisting of one or more pixels. The image areas are labeled by letter A-O in the horizontal direction SD and by number in the vertical direction SA. Image area A1 is the bottom left area, for example. The mask in Fig. 5A-D divides the digital image into a plurality of equally dimensioned and distributed image areas A1-O4, though any area-filling configuration of image areas may be applied. The mask defines which image areas A1-O4 are to printed in each pass of the print head carriage 13. As shown in Fig. 5A, only a selected number of image areas (e.g. B1, E1, G1, etc.) are printed in the first pass in Fig. 5A. The printed image areas are separated from one another by non-printing areas (e.g. A1, C1, D1, etc.). The size, specifically the width WS1-WS3, of the non-printing areas varies over the printed band. For example, a width spacing WS1 on a left hand side of a printed area P2, specifically between printed images areas P1, P2, is different from a width spacing WS2 on a right hand side of said printed area P2, specifically between printed images areas P2, P3. Likewise, the width spacing varies in the non-scanning direction SA. In consequence of the variation in width spacing WS1-3, the distribution of the printed areas over the image area is irregular.

The band is printed bi-directionally, so that the subsequent swath in Fig. 5B was printed with the carriage 13 moving in a direction opposite to that for printing the previous swath in Fig. 5A. In between the two swaths the print medium 8 may be moved a step in the non-scanning direction, but to the extent that the band remains within the working range of the print head carriage 13. For example, if the print head assembly 12a-d has a maximum working range in the non-scanning direction, then in the four pass example of Fig. 5A-D each displacement step is circa ¼ of the working range or less to prevent the band from travelling outside the working range before completion. While a constant step spacing is preferred for accuracy reasons, a varying step spacing may be applied as long as the average step distance for printing a band is at most the working range divided by the number of passes.

In the second pass in Fig. 5B, image areas A1-O4 other than the ones printed in the first pass are printed. The image areas A1-O4 printed in the second pass are indicated in dark grey. Also, the pattern for the second swath defines a number of irregular width spaces. The non-printing areas in the second pass overlap at least partially with the image areas printed in the first pass. Like in the first pass, the distribution of the printed image areas A1-O4 is irregular due to the width spacing between printed image areas A1-O4 being non-constant, in the scanning and non-scanning directions. The non-printing areas in the second swath result in white spaces, which are eventually filled in a similar manner in consecutive swaths in Fig. 5C and 4D. The image areas printed in each pass are indicated with a different greyscale for illustrative purposes.

Each image area is in at least one of the passes or swath part of a non-printing area. The mask is defined such that for each defined image area in the grid printing on said image area is prevented in at least one of the passes required for forming the band or image. Effectively, the mask comprises the digital image and a blank or non-printing image of the same dimensions. The patterns divides both the digital image and the non-printing area into corresponding image areas. The image areas forming the digital image are distributed over a number N of passes, while the non-printing image is defined for at least one pass. The non-printing images are irregular interposed between the image areas defining the digital image along both the number N of passes as well as the geographically across the image area. In consequence, the total number of passes for printing the image with the non-printing image areas inserted becomes N+1. This provides an additional degree of freedom that allows the timing between the printing of geographically neighboring image areas to varied across the image area.

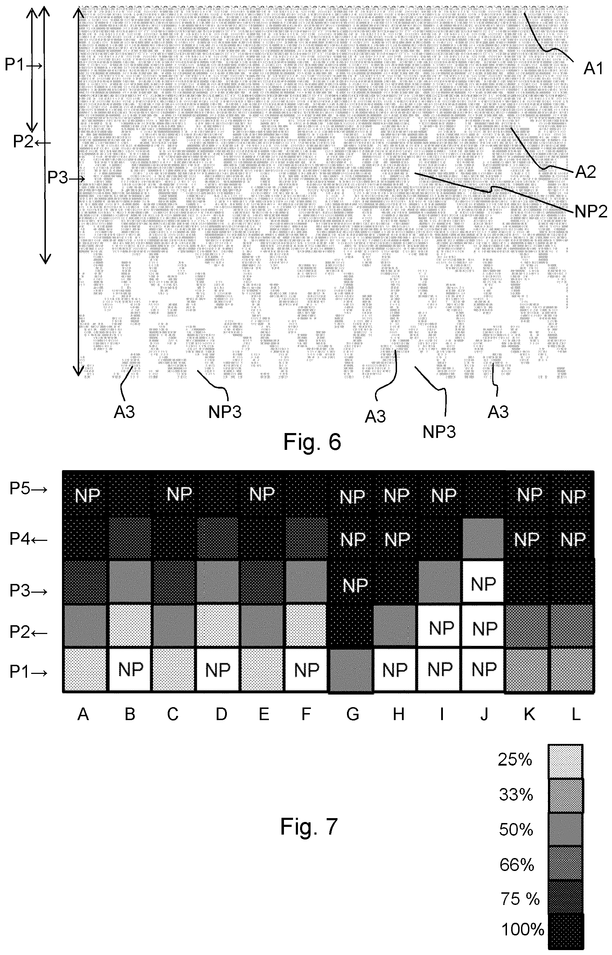

Fig. 6 illustrates an example of printing an image according to the present invention. The image is printed in multiple swaths or passes P1-P3 of the print head carriage 13. The respective travelling direction of each pass P1-P3 is indicated by the respective arrow. Fig. 6 substantially shows three equally sized rows, wherein the top row is as in the final image and formed by an overlap of the patterns of the first, second, and third passes P1-P3 together. The middle row illustrates the combination of a portion of the second printed swath overlapping with the third printed swath. Before printing the second swath the print medium 8 was moved by step distance, such that the top row was positioned outside the working range of the print heads 12a-d. The bottom row illustrates the pattern of the third swath by itself, as the area printed by the second swath was partially moved in the non-scanning direction (AD). It should be noted that the pattern printed in each individual is similar to that of the bottom row, but thrice as large.

In the first pass P1 the carriage 13 was moved from left to right in Fig. 6 and prints on a blank portion of the print medium 8 a predetermined pattern of image areas A1. In the first pass P1, the image was only partially printed (similar to the bottom section of Fig. 6 which shows the portion of the third pass having been printed on a blank portion of the print medium 8), such that numerous non-printing areas NP1 (so-called white spaces) were inserted between the image areas A1. In the example in Fig. 6, the pattern of image areas A1 printed in the first pass P1 is irregular, such that the non-printing spacing width between neighboring printed image areas A1 varies over the surface of the printed swath P1. This results in a non-constant variation in the time periods between the printing of subsequently printed image areas A1. The moment at which an image area is printed in part determines a degree of glossiness of said image area A1 in the final printed image. While the present invention may be applied to any type of glossy print, it is particularly advantageous to high gloss images, which may after printing requiring curing by a light emission source, such as a UV emitter. The degree of glossiness is roughly proportional to the distance of an image area A1 from the starting edge of the respective swath P1-P3. The direction of the carriage 13 is reversed each pass, resulting is a similar reversal in the glossiness variation, which will be visible in the final print product. The present invention seeks to prevent this by varying the differences in time periods between the printing of subsequently printed image areas A1. Such a time period variation is achieved by introducing varying non-printing spacing widths between consecutively printed image areas A1 in a pass P1-P3. In consequence the glossiness variation is spread macroscopically equally over the full surface of the final image, resulting a substantially constant glossiness appearance.

In the example of Fig. 6, the image is printed in multiple passes P1-P3. After printing the pattern in the first pass P1, the print medium 8 is moved by a suitably selected step distance with respect to the carriage 13 perpendicular to the scanning direction SD. A second swath P2 is then printed by passing the carriage 13 over the print medium 8 in the scanning direction SD opposite to the direction of the first pass P1. Additional image areas A2 are then printed on the non-printing areas NP1 from the first pass P1. Similar to the first pass P1, the image areas A2 of the second pass P2 are provided in a predetermined pattern, such that varying non-printing spacing widths or areas NP2 are provided in between consecutively printed image areas A2. Said non-printing areas A2 partially overlap with image areas A1 printed in the first pass P1 as well as with non-printing areas of the first pass P1. The latter overlap results in the blank spaces visible in the second pass P2.

Again, the print medium 8 is moved with respect to the print head carriage 13 a step distance, preferably by the same step distance as between the first and second passes P1, P2. In the third pass P3 the carriage moves in a direction similar to that of the first pass P1 and prints the remaining image areas A3 on the blank spaces which remained after the second pass P2. As such, in the top row indicated by P1 the printed image is completed in a manner wherein the time periods between the printing of physically neighboring image areas in the final image are distributed in a varying and irregular manner over the surface of the image. This results in a locally varying gloss distribution which on a macroscopic appears to the human eye as substantially constant over the full surface of the image. The middle row shows the overlap of two passes P1, P2, wherein non-printing areas remain. The bottom row shows in isolation the pattern printed in the third pass. The top row is an area filling superposition of the individual patterns.

The pattern or distribution applied in Fig. 6 was determined by the control unit 6 by comparing the image data from the print job information to image area pattern distribution determining means to determine the distribution of non-printing areas over the different passes and area of the image. Preferably, the control unit 6 is configured to apply the image area pattern distribution determining means to the image data when operating in a gloss banding reduction mode, which mode may be set by operator input or triggered by a setting embedded in the print job information. The control unit 6 may further operate in a continuous printing mode wherein swaths of the image are printed without the insertion of non-printing areas NP1, NP2.

In the example in Fig. 6, each image area A1-A3 is completed printed in a single pass P1-P3 of the carriage 13. Fig. 7 illustrates another example, wherein image areas A-L are partially printed in multiple passes P1-P5, which offers an additional factor for varying the time period differences between subsequently printed image areas A-L. It will be appreciated that while in the above example for Fig. 6, other relative low level depositions greater than the discussed 0% may be applied, for example 1, 2, 3, 4, 5%, etc.

Fig. 7 illustrates the steps of printing a band according to an embodiment of the method of the present invention. Fig. 7 shows an enlarged view of a section of the band comprising 12 image areas A-L. The letters A-L indicate the different image areas A-L which are positioned in a row along the scanning direction SD. The numbers 1-5 represent the respective passes or swaths, wherein the band is printed. In the embodiment in Fig. 7, the band is printed in a total of five swaths, though any integer number greater than one may be applied within the present invention. An image area A-L not printed on during a pass P1-P5 is indicated with NP for said respective pass P1-P5.

As shown in the bottom row of Fig. 7 in the first pass P1 a number of image areas A, C, E, G, K, L are printed. The first pass P1 starts from the left side of Fig. 7 as indicated by the respective arrow. The carriage 13 therein moves to the right in the scanning direction SD. The image areas A, C, E, G, K, L printed in the first pass P1 are printed in a predetermined pattern, such that non-printing areas B, D, F, H, I, J are interposed between the printed image areas A, C, E, G, K, L. The spacing width of the non-printing areas B, D, F, H, I, J is non-constant over the width of the first pass P1. For example, the spacing width of the non-printing area H-J between the neighboring printed areas G and K is three times as wide as the spacing width of the non-printing areas B, D, F. The printed areas K, L are printed without a non-printing area between them.

Further, each image area A-L in Fig. 7 is printed in multiple passes P1-P5, specifically in no more than the total number of passes P1-P5 minus one. For example, in the first pass the image areas A, C, E are printed partially printed with an ink coverage of circa 25% percent of the final ink coverage of said image areas A, C, E in the final image. Image area G is covered in the first pass P with circa 50% of its final ink coverage, while image areas K, L are printed with circa one third of their final ink coverage.

After completing the first pass P1, the direction of the carriage 13 is reversed to print the second swath P2. In between said passes P1, P2, the print medium 8 is moved with respect to the carriage 13 in the transport direction. In the second pass P2 only the image areas I and J skipped for printing, resulting in non-printing white spaces. In the second pass P2 the image areas A, C, E are printed over partially printed with an additional ink coverage of circa 25% percent, resulting in a total ink coverage ratio of circa 50% of the final ink coverage of said image areas A, C, E in the final image. Likewise, image areas B, D, F are partially printed with their first 25% percent ink coverage ratio. Image area G is completed by an additional 50% ink coverage, while image area H receives its initial 50% ink coverage. Image areas K, L are further covered to comprise an ink coverage ratio of circa two thirds with respect to the final image.

As can be seen in Fig. 7, the image areas A, C, E are completed in the subsequent passes P3, P4, while the image areas B, D, F are completed similarly but delayed one pass, such that these are completed in the fifth pass P5. Image areas G-J are completed in only two of the five passes P1-P5, though image areas H-J are each delayed by an increasing number of passes. Image areas K, L are completed in

Image area G1 is covered in the first pass P1 with circa 50% of its final ink coverage, while image areas K1, L1 are printed with circa one third of their final ink coverage.

Fig. 7 further illustrates the varying pattern of the non-printing areas NPs over the image areas A-L as well as over the different passes P1-P5. While Fig. 7 shows non-printing areas in the intermediate passes P2-P4, a single non-printing pass per image area A-L is sufficient to introduce a degree of freedom which allows for variation in the time periods between consecutively printed image areas A-L.

### Image processing

The image processing unit 39 processes the received print job to suitably control a scanning inkjet printer to perform the above described method. The print job information comprises image data defining the image to be printed on the print medium 8. The image data may define an image of a certain size on a grid. A suitably sized image A-L area is selected by the operator or the image processing unit 39, for example image areas of circa 10 by 10 pixels may be applied for an image formed of a circa 600 by 900 dots per inch grid.

With the appropriate image area dimensions a distribution of the image areas A-L over the image and the number is passes P1-P5 is selected. The image areas A-L are suitably distributed over the image in an irregularly varying pattern, such that the time differences between the printing of physically neighboring image areas A-L are distributed non-regularly over the image. This may be achieved by printing a number of multiple passes P1-P5, wherein each image area A-L is printed on at maximum said number minus one times. This introduces in at least the first and the final pass P1, P5 a plurality of non-printing areas NP interposed between printed image areas A-L. As shown in Fig. 4B, 6 and 7 the non-printing areas NP in the first and last pass P1, P5 comprise a plurality of different sized non-printing areas NP distributed irregularly in the scanning direction SD.

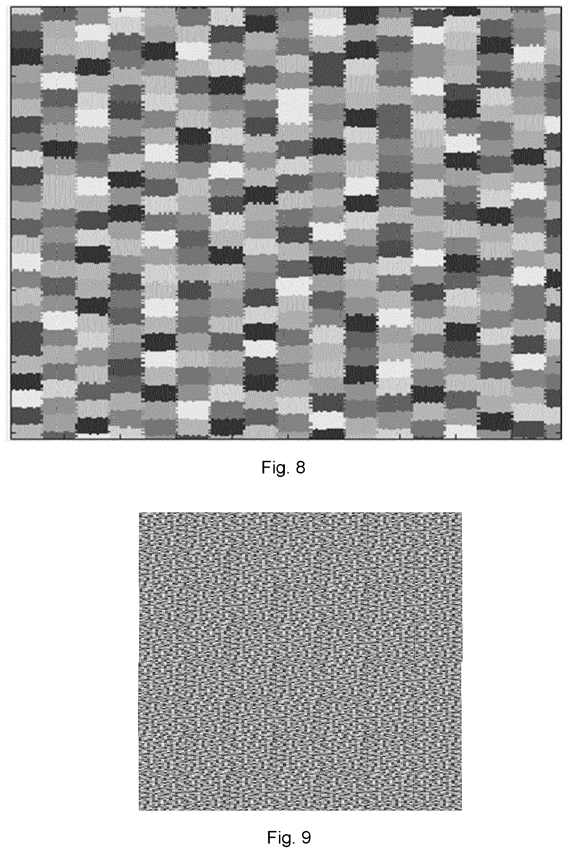

The non-printing areas NP may be distributed over the first and final passes P1-P5 by means of a predetermined pattern, such as the one shown in Fig. 8. The pattern in Fig. 8 illustrates the geographical distribution of the ink coverage ratio applied per pass for image areas A-L. The image areas A-L are substantially rectangular with at least one edge extending parallel to the scanning direction SD. The edges of the image areas A-L in Fig. 8 are chamfered or non-regular to improve the optical blending between neighboring image areas A-L. The ink coverage ratios are distributed and in consequence the non-printing areas NP for each pass P1-P5 are preferably non-regularly distributed over the image surface. The pattern of the non-printing areas P1-P5 is preferably non-repeating or even randomized. Specifically, the pattern in Fig. 8 illustrates a stochastic distribution of the ink coverage ratio of the image areas A-L over surface of the image. The grey scale of each image area corresponds to a deposition of certain amount of ink for a certain ink coverage ratio. The example in Fig. 8 defines twelve levels such grey scale levels, though any suitable integer number may be used within in the present invention. Aside from stochastic, other suitable distributions may be applied, such as randomizers or Monte-Carlo based distributions. Mathematical formulas may also be applied to define the pattern, given that said formulas provides sufficient variation in the time periods between neighboring image areas to avoid macroscopic gloss effects.

The distribution in Fig. 8 is a measure for the glossiness of the printed image. As indicated the non-printing areas NP provide a spread in the time periods between the printing of neighboring image areas A-L, which results in a local or microscopic variation of the gloss level of the image areas A-L. While the distribution is locally or microscopically irregular, it is selected such that the gloss level is macroscopically, as shown in Fig. 9. When averaging the time period differences or the gloss levels between image areas over a larger area, e.g. 10 by 10 image areas or larger, the resulting average value is substantially the same over the complete image. This appears to a viewer spaced at a distance from the final image as a substantially constant gloss level.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims are herewith disclosed.
Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, such a reference to a structural element encompasses a computer readable medium carrying such computer executable instructions.
Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.
The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A method for scanning inkjet printing an image, comprising the step of:
- printing the image divided into sections with different gloss levels which vary irregularly throughout the image, such that a gloss level averaged over an area comprising a large number of said sections is substantially similar throughout the image.

2. The method according to claim 1, further comprising the steps of:
- printing a first predetermined pattern of sections for forming the image during a first pass of a print head carriage over a print medium to print a first swath, wherein low level deposition areas, wherein significantly less marking material is deposited than in said sections, are interposed between said sections;
- printing further predetermined patterns of sections during their respective further passes of the print head carriage to print further swaths at least partially overlapping the first swath, wherein low level deposition areas are interposed between said sections, wherein the further patterns differ from the first pattern, such that differences in marking material completion levels relative to a respective final level of marking material of a respective section between a section printed in the first pass and a neighboring section printed in at least one of the further passes varies irregularly throughout the image.

3. The method according to claim 1 or 2, further comprising the step of:
- printing a swath in each of the number of passes of passes of a print head carriage over a print area on a print medium, which swaths are overlapping to form an image portion, which swath in a plurality of the passes is spatially divided into a plurality of deposition level zones, wherein a plurality of deposition zones define a level of marking material deposition that is different between said deposition zone and its neighboring zones, **characterized in that** the levels of marking material deposition are distributed irregularly across the deposition level zones in the respective swaths.

4. The method according to claim 2 or 3, wherein the levels of marking material deposition are distributed irregularly across the deposition level zones in the respective swaths, which results in gloss levels of sections of the print area being distributed irregularly across the respective swaths.

5. The method according to claim 4, wherein the averaged gloss level distribution within a swath is substantially invariant to a starting direction of the swath.

6. The method according to any of the previous claims, wherein for a plurality of deposition level zones a level of marking material deposition of a first neighboring deposition level zone is different from that of second neighboring deposition level zone.

7. The method according to any of the previous claims, wherein the relative positioning of deposition level zones of the same or similar level of marking material deposition is different in each of the plurality of passes.

8. The method according to any of the previous claims, wherein the levels of marking material deposition are distributed irregularly across the deposition level zones in the respective swaths, such that time differences between neighboring deposition level zones exceeding a certain deposition threshold level relative with respect to a final deposition level for each marking material in each section of the print area vary irregularly throughout the swath.

9. The method according to claim 8, wherein the timing differences are proportional to gloss differences between deposition level zones, such that gloss levels of sections of the print area vary irregularly through the swath.

10. The method according to any of the previous claims, wherein the deposition level zones are dimensioned and positioned to overlap the same sections of the print area in each of the plurality of passes.

11. The method according to claim 10, wherein at least three different levels of marking material deposition for at least one marking material are applied within a swath, preferably at least four different levels of marking material deposition, and very at least preferably five different levels of marking material deposition.

12. The method according to any of the previous claims, wherein the swath data sets comprise a near-zero deposition level zone for each section of the print area in at least one of the swaths, in which near-zero deposition level zone one the level of marking material deposition is significantly less than in the remaining deposition level zones.

13. A scanning inkjet printer comprising:
- scanning inkjet carriage holding a plurality of print head reciprocally translatable over a medium support surface;
- an image receiving unit configured for receiving image data defining an image portion;
- a image data processing unit for processing the image data;
- a swath data set generator configured to define a plurality of swath data sets, which swath data sets are configured to yield the image portion after having been printed in an at least partially overlapping manner,
- an irregular gloss level distributor configured to divide a print area defined by a swath data set into deposition level zones, wherein a plurality of deposition zones define a level of marking material deposition that is different between said deposition zone and its neighboring deposition level zones, **characterized in that** the deposition level zone divider distributes levels of marking material deposition irregularly across the deposition level zones in the respective swath data sets.

14. A non-transitory computer-readable storage medium storing game program which causes a controller to execute the method according to any of the claims 1 to 12.

15. A print medium comprising an inkjet printed image formed of sections with varying gloss levels which gloss levels are distributed irregularly through the image, such that the average gloss level over an area comprising a number of sections is substantially constant throughout the image.
